# EUROPEAN PATENT SPECIFICATION

(11) **EP 3 995 753 B1**
(45) Date of publication and mention of the grant of the patent: **14.02.2024**
(21) Application number: 19936352.4
(22) Date of filing: 04.07.2019
(51) Int. Cl.: F24H 4/02, F24D 3/08, F24D 3/18, F24H 15/136

(54) **HOT WATER SUPPLY SYSTEM**
HEISSWASSERVERSORGUNGSSYSTEM
SYSTÈME D'ALIMENTATION EN EAU CHAUDE

(43) Date of publication of application: 11.05.2022
(73) Proprietor: MITSUBISHI ELECTRIC CORPORATION, Chiyoda-ku Tokyo 100-8310 (JP)
(72) Inventor: TAKAYAMA, Keisuke, Tokyo 100-8310 (JP)
(74) Representative: Pfenning, Meinig & Partner mbB
(86) International application number: PCT/JP2019/026671
(87) International publication number: WO 2021/002004

(56) References cited:
- WO-A1-2016/001980
- WO-A1-2016/001980
- WO-A1-2018/096664
- WO-A1-2018/096664
- JP-A- 2005 140 439
- JP-A- 2005 140 439

## Description

### Field

The present invention relates to a hot-water supply system.

### Background

PTL 1 discloses an indirect hot-water supply-type hot-water supply apparatus configured to exchange heat between a refrigerant from a heat pump and water, and then further exchange heat between the water and water.

PTL 2 provides a heating and hot water supply system that can suppress energy consumption. The heating and hot water supply system is provided with: a liquid heating device that heats a liquid; a liquid/water heat exchanger; a heater that heats using the heat from the liquid; a water heating circuit that circulates the liquid between the liquid heating device and the liquid/water heat exchanger; a heating circuit that circulates the liquid between the liquid heating device and the heater; a first valve that switches between the water heating circuit and the heating circuit; a bottom outward path that leads water from the bottom of a hot water storage tank to the liquid/water heat exchanger; a top return path that leads water from the liquid/water heat exchanger to the top of the hot water storage tank; a middle outward path that leads water from the middle of the hot water storage tank to the liquid/water heat exchanger; a middle return path that leads water from the liquid/water heat exchanger to the middle of the hot water storage tank; a second valve that switches between the bottom outward path and the middle outward path; a third valve that switches between the top return path and the middle return path; a middle hot water supply tube that connects to the middle of the hot water supply tank; and a top hot water supply tube that connects to the top of the hot water supply tank.

### Citation List

### Patent Literature

[PTL 1] JP 2015-224796 A
[PTL 2] WO 2016/001980 A1

### Summary

### Technical Problem

In the conventional hot-water supply apparatus described above, since a compressor of the heat pump is stopped before a heat accumulating operation for storing hot water in a hot-water storage tank is started, the compressor and a water-refrigerant heat exchanger are low in temperature. The temperature of the water-refrigerant heat exchanger still remains low immediately after the heat pump is started and the heat accumulating operation is started. This causes a problem in which the water having the temperature lower than the hot water in the hot-water storage tank flows into the hot-water storage tank, which causes decrease in the temperature of the hot water in the hot-water storage tank.

The present invention has been made to solve the above-described problem, and it is an object to provide a hot-water supply system which is advantageous to reduce a decrease in hot-water temperature in a hot-water storage tank when a heat accumulating operation is started.

### Solution to Problem

A hot-water system according to the present invention includes: compressor for compressing a refrigerant; first heat exchanger for exchanging heat between the refrigerant compressed by the compressor and a heat medium; a second heat exchanger for exchanging heat between the heat medium flowing out of the first heat exchanger and water; heat-medium circuit connecting the first heat exchanger to the second heat exchanger; heat-medium pump for circulating the heat medium in the heat-medium circuit; a hot-water storage tank including a lower portion provided with a water outlet, and an upper portion provided with a hot-water inlet at a level higher than a level of the water outlet; a water-feed path connecting the water outlet to the second heat exchanger; a water-return path connecting the second heat exchanger to the hot-water inlet; a water pump for circulating the water in a water circuit formed by the water-feed path, the second heat exchanger, and the water-return path; a heat pump outlet temperature sensor for detecting a heat pump outlet temperature that is a temperature of the heat medium flowing out of the first heat exchanger; an upper tank temperature sensor for detecting an upper tank temperature that is a temperature of water in the upper portion of the hot-water storage tank; and control circuitry configured to control a heat accumulating operation for causing hot water flowing out of the second heat exchanger to flow into the hot-water storage tank. The control circuitry is configured to: in starting the heat accumulating operation, perform a first starting operation and a second starting operation after the first starting operation; in the first starting operation, work the compressor and the heat-medium pump while the water pump is stopped; in the second starting operation, work the compressor, the heat-medium pump, and the water pump; determine a first reference temperature in response to the upper tank temperature, the first reference temperature being equal to or higher than the upper tank temperature; and finish the first starting operation and start the second starting operation, when the heat pump outlet temperature reaches the first reference temperature during the first starting operation. Advantageous Effects of Invention

The present invention makes it possible to provide a hot-water supply system which is advantageous to reduce a decrease in hot-water temperature in a hot-water storage tank when a heat accumulating operation is started.

### Brief Description of Drawings

Fig. 1 is a diagram illustrating a hot-water supply system according to embodiment 1.
Fig. 2 is a functional block diagram of the hot-water supply system according to embodiment 1.
Fig. 3 is a flowchart illustrating an example of processes when a heat accumulating operation is started.
Fig. 4 is a graph illustrating an example of a change over time in each of a temperature detected by a heat pump outlet temperature sensor, a temperature detected by a tank inflow temperature sensor, a rotational speed of a compressor, a target value of a discharge refrigerant temperature, a rotational speed of a heat-medium pump and a rotational speed of a water pump, when the heat accumulating operation is started.
Fig. 5 is a flowchart illustrating an example of processes of determining whether to skip a first starting operation.

### Description of Embodiment

Hereinafter, an embodiment will be described with reference to the drawings. Common or corresponding elements in the respective drawings are assigned with same reference signs, and redundant explanation is simplified or omitted.

### Embodiment 1

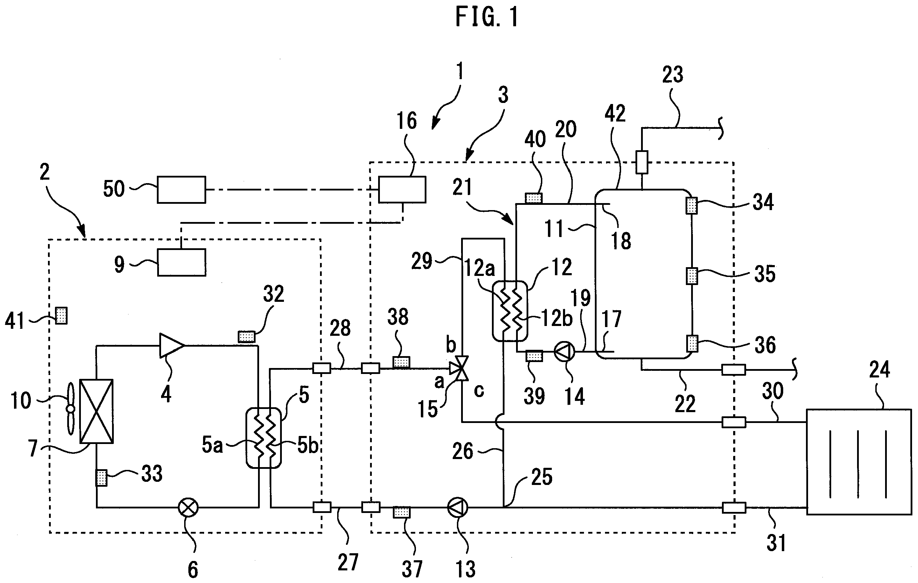

Fig. 1 is a diagram illustrating a hot-water supply system according to embodiment 1. As illustrated in Fig. 1, a hot-water supply system 1 of the present embodiment includes a heat pump unit 2, and a tank unit 3. The heat pump unit 2 is disposed outdoors. The tank unit 3 is disposed outdoors or indoors. In the present embodiment, the heat pump unit 2 and the tank unit 3 are separated from each other, but the hot-water supply system according to the present disclosure may have a structure in which the heat pump unit 2 and the tank unit 3 are integrated with each other.

The heat pump unit 2 includes a compressor 4 for compressing refrigerant, a first heat exchanger 5, an expansion valve 6, an air heat exchanger 7, and a heat pump controller 9. A substance used as the refrigerant is not limited to a particular substance, but for example, CO₂, HFC, HC, HFO or the like may be used as the substance. The first heat exchanger 5 includes a primary flow path 5a and a secondary flow path 5b. Heat is exchanged between the refrigerant flowing in the primary flow path 5a and a heat medium flowing in the secondary flow path 5b. A substance used as the heat medium may be liquid water or brine other than water. The compressor 4, the primary flow path 5a, the expansion valve 6, and the air heat exchanger 7 are connected via a refrigerant pipe, whereby a refrigerant circuit is formed.

The expansion valve 6 corresponds to a decompressor for decompressing and expanding high-pressure refrigerant. The air heat exchanger 7 exchanges the heat between outdoor air taken in from outside of the heat pump unit 2 and the refrigerant. The air heat exchanger 7 may function as an evaporator for evaporating the refrigerant using the heat of the outdoor air. The heat pump unit 2 may include a blower 10 for causing the outdoor air to flow through the air heat exchanger 7.

The tank unit 3 includes a hot-water storage tank 11, a second heat exchanger 12, a heat-medium pump 13, a water pump 14, a flow-path switching valve 15, and a tank unit controller 16.

The hot-water storage tank 11 stores hot water heated by the heat pump unit 2. In the hot-water storage tank 11, temperature stratification in which an upper side has high temperature and a lower side has low temperature is formed due to a difference in the specific gravity of water caused by a difference in temperature. The hot-water storage tank 11 is covered by a heat insulating material (not illustrated). A water outlet 17 is provided at a lower portion of the hot-water storage tank 11. A hot-water inlet 18 is provided at an upper portion of the hot-water storage tank 11.

The second heat exchanger 12 includes a primary flow path 12a and a secondary flow path 12b. Heat is exchanged between the heat medium flowing in the primary flow path 12a and the water flowing in the secondary flow path 12b. A water-feed path 19 connects the water outlet 17 to an inlet of the secondary flow path 12b. The water pump 14 is provided in a midway of the water-feed path 19. A water-return path 20 connects an outlet of the secondary flow path 12b to the hot-water inlet 18. A water circuit 21 is formed by the water-feed path 19, the secondary flow path 12b, and the water-return path 20. When the water pump 14 is worked, the water flows in the water circuit 21.

A water supply pipe 22 is connected to the lower portion of the hot-water storage tank 11. The water supply pipe 22 extends to the outside of the tank unit 3. For example, the water supplied from a water source such as a municipal water supply flows into the hot-water storage tank 11 through the water supply pipe 22. A hot-water supply pipe 23 is connected to the upper portion of the hot-water storage tank 11. The hot-water supply pipe 23 extends to the outside of the tank unit 3. The hot water stored in the hot-water storage tank 11 is supplied to, through the hot-water supply pipe 23, a hot-water supply terminal such as a shower, a faucet, or a bathtub, for example. When the hot water flows out of the hot-water storage tank 11 through the hot-water supply pipe 23, the water of an amount equal to that of the hot water having flowed out flows into the hot-water storage tank 11 from the water supply pipe 22. As a result, the hot-water storage tank 11 is kept in a fully filled state.

The hot-water supply system 1 of the present embodiment can perform an indoor-heating operation for causing the heat medium to be circulated through an indoor-heating device 24. The indoor-heating device 24 is installed in a room. The indoor-heating device 24 may include at least one of a floor heating panel installed under a floor, a radiator installed on an indoor wall, a panel heater, and a fan convector, for example. The hot-water supply system according to the present invention need not have a function of performing the indoor-heating operation. That is, the indoor-heating device 24 need not be provided.

A branch 25 is formed in a path on an upstream side of a suction port of the heat-medium pump 13. A path 26 connects an outlet of the primary flow path 12a to the branch 25. The flow-path switching valve 15 is a valve for switching the circuit in which the heat medium flows. The flow-path switching valve 15 includes a port *a* which is an inlet, a port *b* which is an outlet, and a port *c* which is an outlet.

The heat pump unit 2 and the tank unit 3 are connected to each other by paths 27 and 28. The path 27 connects a discharge port of the heat-medium pump 13 to an inlet of the secondary flow path 5b. The path 28 connects an outlet of the secondary flow path 5b to the port *a* of the flow-path switching valve 15. Each of the paths 27 and 28 has a portion disposed outside of the heat pump unit 2 and the tank unit 3. In a case where the installation place of the heat pump unit 2 and the installation place of the tank unit 3 are apart from each other, longer paths 27 and 28 are used. A path 29 connects the port *b* of the flow-path switching valve 15 to an inlet of the primary flow path 12a.

The tank unit 3 and the indoor-heating device 24 are connected to each other by paths 30 and 31. The path 30 connects the port c of the flow-path switching valve 15 to an inlet for the heat medium of the indoor-heating device 24. The path 31 connects an outlet for the heat medium of the indoor-heating device 24 to the branch 25.

A refrigerant temperature sensor 32 is disposed in the refrigerant pipe between the compressor 4 and the first heat exchanger 5. The refrigerant temperature sensor 32 can detect a discharge refrigerant temperature which is a temperature of the refrigerant discharged from the compressor 4. A refrigerant temperature sensor 33 is disposed in the refrigerant pipe between the expansion valve 6 and the air heat exchanger 7. The refrigerant temperature sensor 33 can detect a refrigerant inlet temperature which is a temperature of the refrigerant flowing from the expansion valve 6 into the air heat exchanger 7.

In the hot-water storage tank 11, a plurality of tank temperature sensors 34, 35, and 36 are provided at respective positions different in height from each other. The tank temperature sensors 34, 35, and 36 detect the water temperature in the hot-water storage tank 11. The tank temperature sensor 34 is disposed at the same height position as the hot-water inlet 18. The tank temperature sensor 36 is disposed at the same height position as the water outlet 17. The tank temperature sensor 35 is disposed at the position at a height higher than the water outlet 17 and lower than the hot-water inlet 18. In the following description, the temperature of the water in the upper portion of the hot-water storage tank 11 is referred to as an "upper tank temperature." The tank temperature sensor 34 in the present embodiment corresponds to an upper tank temperature sensor for detecting the upper tank temperature.

In the following description, the temperature of the heat medium flowing into the secondary flow path 5b is referred to as a "heat pump inlet temperature," and the temperature of the heat medium flowing out of the secondary flow path 5b is referred to as a "heat pump outlet temperature." A heat pump inlet temperature sensor 37 installed to the path 27 detects the heat pump inlet temperature. A heat pump outlet temperature sensor 38 installed to the path 28 detects the heat pump outlet temperature. In the illustrated example, the heat pump inlet temperature sensor 37 and the heat pump outlet temperature sensor 38 are disposed in the tank unit 3, but the heat pump inlet temperature sensor 37 and the heat pump outlet temperature sensor 38 may be disposed in the heat pump unit 2.

In the following description, the temperature of the water flowing from the hot-water storage tank 11 into the second heat exchanger 12 is referred to as an "inflow water temperature." The inflow water temperature can be detected by an inflow water temperature sensor 39 installed to the water-feed path 19. A tank inflow temperature sensor 40 installed to the water-return path 20 can detect the temperature of the hot water flowing from the second heat exchanger 12 into the hot-water storage tank 11. In the following description, the temperature detected by the tank inflow temperature sensor 40 is referred to as a "tank inflow temperature." An outdoor air temperature sensor 41 for detecting an outdoor air temperature is installed in the heat pump unit 2.

In the present embodiment, the hot-water storage tank 11 has an uppermost portion 42 for storing the hot water at a position higher than the hot-water inlet 18. An inlet of the hot-water supply pipe 23 is located in the uppermost portion 42. The hot-water supply pipe 23 is configured to take out the hot water in the uppermost portion 42. The hot water in the uppermost portion 42 is supplied to the outside through the hot-water supply pipe 23.

The heat pump controller 9 and the tank unit controller 16 are connected to be capable of performing bidirectional data communication by wiredly or wirelessly. The heat pump controller 9 and the tank unit controller 16 correspond to control circuitry configured to control the operation of the hot-water supply system 1. At least one of the heat pump controller 9 and the tank unit controller 16 may have a timer function of managing a time. At least one of the heat pump controller 9 and the tank unit controller 16 may have a calendar function of managing a date.

In the present embodiment, the heat pump controller 9 and the tank unit controller 16 cooperate with each other to control the operation of the hot-water supply system 1. The present disclosure is not limited to a configuration in which a plurality of controllers cooperate with each other to control the operation of the hot-water supply system 1 as in the illustrated example, and may adopt a configuration in which a single controller is used to control the operation of the hot-water supply system 1.

The hot-water supply system 1 of the present embodiment includes a remote controller 50. The remote controller 50 and the tank unit controller 16 are connected to be capable of performing bidirectional data communication by wiredly or wirelessly. The remote controller 50 may be installed in a room. The remote controller 50 has a function of receiving operations of a user concerning an operation action command, change of set values, and the others. The remote controller 50 corresponds to a user interface. Although not illustrated, on the remote controller 50, a display displaying information on a state of the hot-water supply system 1, operation sections such as a switch operated by a user, a speaker, a microphone and the like may be mounted. The hot-water supply system 1 may include a plurality of remote controllers 50 installed in different places. Instead of the remote controller 50 or in addition to the remote controller 50, a portable terminal such as a smartphone or a tablet terminal may be used as the user interface of the hot-water supply system 1, for example.

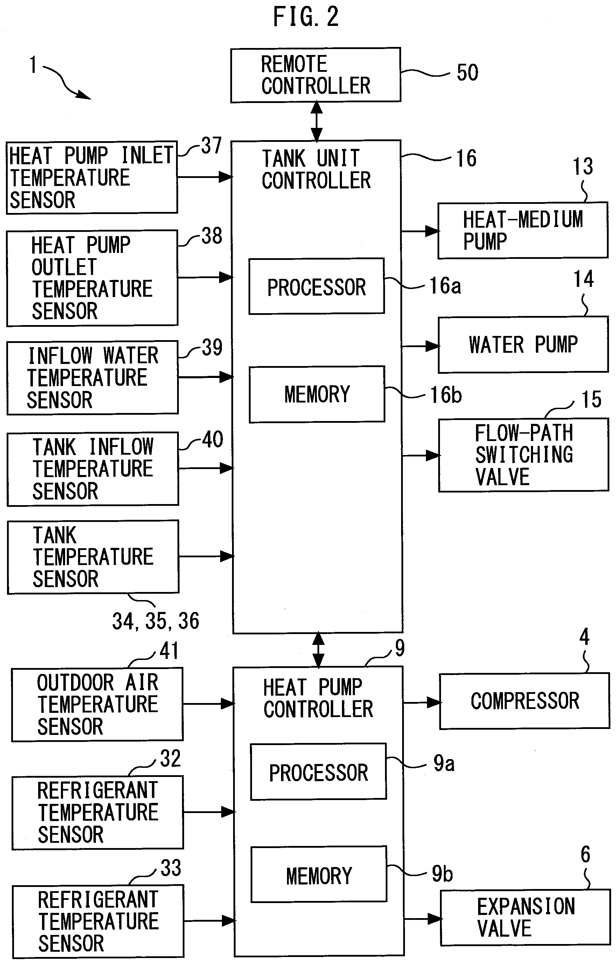

Fig. 2 is a functional block diagram of the hot-water supply system 1 according to embodiment 1. As illustrated in Fig. 2, each of the compressor 4, the expansion valve 6, the refrigerant temperature sensor 32, the refrigerant temperature sensor 33, and the outdoor air temperature sensor 41 is electrically connected to the heat pump controller 9. Each of the heat-medium pump 13, the water pump 14, the flow-path switching valve 15, the tank temperature sensors 34, 35, and 36, the heat pump inlet temperature sensor 37, the heat pump outlet temperature sensor 38, the inflow water temperature sensor 39, and the tank inflow temperature sensor 40 is electrically connected to the tank unit controller 16.

Each function of the heat pump controller 9 may be implemented by processing circuitry. The processing circuitry of the heat pump controller 9 may include at least one processor 9a and at least one memory 9b. The at least one processor 9a may read out and execute the programs stored in the at least one memory 9b, thereby implementing each function of the heat pump controller 9. The processing circuitry of the heat pump controller 9 may include at least one piece of dedicated hardware.

Each function of the tank unit controller 16 may be implemented by processing circuitry. The processing circuitry of the tank unit controller 16 may include at least one processor 16a and at least one memory 16b. The at least one processor 16a may read out and execute the programs stored in the at least one memory 16b, thereby implementing each function of the tank unit controller 16. The processing circuitry of the tank unit controller 16 may include at least one piece of dedicated hardware.

The heat pump controller 9 can control the compressor 4 so that the rotational speed of the compressor 4 is variable by inverter control, for example. The tank unit controller 16 can control the heat-medium pump 13 and the water pump 14 so that each of the rotational speed of the heat-medium pump 13 and the rotational speed of the water pump 14 is variable by inverter control, for example.

The hot-water supply system 1 can perform a heat accumulating operation. The heat accumulating operation is an operation for causing the hot water flowing out of the second heat exchanger 12 to flow into the hot-water storage tank 11. The heat pump controller 9 and the tank unit controller 16 control the heat accumulating operation. The heat pump controller 9 and the tank unit controller 16 control an operation during the heat accumulating operation as follows. The compressor 4, the heat-medium pump 13, and the water pump 14 are driven. In the flow-path switching valve 15, the port *a* communicates with the port *b,* whereby the port c is closed. The refrigerant compressed by the compressor 4 into a high-temperature and high-pressure state flows into the primary flow path 5a of the first heat exchanger 5. The refrigerant flowing in the primary flow path 5a is cooled by the heat medium flowing in the secondary flow path 5b. The refrigerant having passed the primary flow path 5a is decompressed by the expansion valve 6, thereby becoming low-temperature and low-pressure refrigerant. The low-temperature and low-pressure refrigerant flows into the air heat exchanger 7. In the air heat exchanger 7, the heat is exchanged between the outdoor air blown by the blower 10 and the low-temperature and low-pressure refrigerant. The refrigerant is evaporated by being heated by the outdoor air in the air heat exchanger 7. The evaporated refrigerant is sucked into the compressor 4. Thus, a refrigeration cycle is formed.

The heat medium heated by the refrigerant in the first heat exchanger 5 flows into the primary flow path 12a of the second heat exchanger 12 through the path 28, the flow-path switching valve 15, and the path 29. The heat medium having passed the primary flow path 12a returns to the first heat exchanger 5 through the path 26, the branch 25, the heat-medium pump 13, and the path 27. Hereinafter, a circuit in which the heat medium is thus circulated through the first heat exchanger 5 and the second heat exchanger 12 is referred to as a "heat-medium circuit."

The water in the lower portion of the hot-water storage tank 11 flows into the secondary flow path 12b through the water outlet 17 and the water-feed path 19. In the second heat exchanger 12, the water flowing in the secondary flow path 12b is heated by the heat medium flowing in the primary flow path 12a. The heated hot water flows into the upper portion of the hot-water storage tank 11 through the water-return path 20 and the hot-water inlet 18. The hot water is accumulated in the hot-water storage tank 11 by such a heat accumulating operation, whereby an amount of stored heat in the hot-water storage tank 11 is increased.

Hereinafter, a target value of the temperature of the hot water flowing into the hot-water storage tank 11 in the heat accumulating operation is referred to as a "target hot-water storage temperature." The tank unit controller 16 may determine the target hot-water storage temperature in response to the hot-water supply set temperature set by a user using the remote controller 50. For example, the tank unit controller 16 may set, as the target hot-water storage temperature, the temperature equal to the hot-water supply set temperature or the temperature higher than the hot-water supply set temperature. The target hot-water storage temperature may be 65°C, for example.

The tank unit controller 16 can calculate an amount of hot-water storage or an amount of stored heat in the hot-water storage tank 11 using temperature distribution along the vertical direction in the hot-water storage tank 11 detected by the tank temperature sensors 34, 35, and 36. The tank unit controller 16 calculates a current amount of hot-water storage or a current amount of stored heat at predetermined time intervals. When the current amount of hot-water storage or the current amount of stored heat falls below a reference value, the heat pump controller 9 and the tank unit controller 16 start the heat accumulating operation. When the amount of hot-water storage or the amount of stored heat reaches the target value during the heat accumulating operation, the heat pump controller 9 and the tank unit controller 16 finishes the heat accumulating operation.

The tank unit controller 16 may detect a hot-water supply load by detecting the temperature and amount of hot water flowing in the hot-water supply pipe 23 by sensors (not illustrated). The tank unit controller 16 may set a target value of the amount of hot-water storage or the amount of stored heat based on learning results obtained by statistically processing the hot-water supply loads in a plurality of past days.

Heating power [W] of the heat pump unit 2 is an amount of heat to be applied to the heat medium per unit time by the heat pump unit 2. The heat pump controller 9 can adjust the rotational speed of the compressor 4 so that predetermined heating power can be obtained. Hereinafter, the degree of superheating of the refrigerant sucked by the compressor 4 is referred to as a "suction superheating degree." The heat pump controller 9 may adjust an opening degree of the expansion valve 6 so that the suction superheating degree or the discharge refrigerant temperature detected by the refrigerant temperature sensor 32 is equal to the target value. As the opening degree of the expansion valve 6 becomes larger, the refrigerant flow rate increases, and the discharge refrigerant temperature and the suction superheating degree decrease.

The hot-water supply system 1 can perform the indoor-heating operation. The heat pump controller 9 and the tank unit controller 16 control the indoor-heating operation. The heat pump controller 9 and the tank unit controller 16 control an operation during the indoor-heating operation as follows. The compressor 4 and the heat-medium pump 13 are driven. The water pump 14 is stopped. In the flow-path switching valve 15, the port *a* communicates with the port c, whereby the port *b* is closed. The heat pump unit 2 performs an operation in the same manner as the heat accumulating operation. The heat medium heated by the refrigerant in the first heat exchanger 5 flows into the indoor-heating device 24 through the path 28, the flow-path switching valve 15, and the path 30. The indoor-heating device 24 heats the room using the heat of the heat medium. The temperature of the heat medium decreases while the heat medium is passing the indoor-heating device 24. The heat medium whose temperature has decreased returns to the first heat exchanger 5 through the path 31, the branch 25, the heat-medium pump 13, and the path 27. Hereinafter, a circuit in which the heat medium is thus circulated through the first heat exchanger 5 and the indoor-heating device 24 is referred to as a "indoor-heating circuit."

In the present embodiment, the flow-path switching valve 15 switches between the indoor-heating circuit and the heat-medium circuit, thereby capable of switching between the indoor-heating operation and the heat accumulating operation. Accordingly, the flow-path switching valve 15 corresponds to a switching valve for switching between the indoor-heating operation and the heat accumulating operation.

Since the compressor 4 and the first heat exchanger 5 are low in temperature immediately after the heat pump unit 2 is started, the heat pump outlet temperature is not likely to be increased. When the heat pump outlet temperature is not likely to be increased, the tank inflow temperature is also not likely to be increased. When the hot water having a temperature lower than the upper tank temperature flows in a large amount from the second heat exchanger 12 into the hot-water storage tank 11, the upper tank temperature greatly decreases. When the upper tank temperature decreases, it is unfavorable since the temperature of the hot water supplied through the hot-water supply pipe 23 decreases.

In the present embodiment, when the heat pump controller 9 and the tank unit controller 16, in starting the heat accumulating operation, perform a first starting operation and a second starting operation to reduce a decrease in upper tank temperature.

In the first starting operation, the heat pump controller 9 and the tank unit controller 16 work the compressor 4 and the heat-medium pump 13 while the water pump 14 is stopped. At this time, the heat medium is circulated through the heat-medium circuit. The following effects are obtained by performing the first starting operation. Since the water does not flow in the secondary flow path 12b, the heat of the heat medium can be prevented from being captured by the water in the second heat exchanger 12. As a result, both of the heat pump outlet temperature and the pressure of the refrigerant discharged from the compressor 4 can be increased quickly. In the first starting operation, since the water does not flow into the upper portion of the hot-water storage tank 11, the decrease in the upper tank temperature can be prevented reliably.

In the second starting operation, the heat pump controller 9 and the tank unit controller 16 work the compressor 4, the heat-medium pump 13, and the water pump 14. When the heat pump outlet temperature detected by the heat pump outlet temperature sensor 38 reaches a first reference temperature during the first starting operation, the tank unit controller 16 starts the water pump 14. That is, when the heat pump outlet temperature reaches the first reference temperature, the first starting operation is finished, and the second starting operation is started.

The tank unit controller 16 determines the first reference temperature in response to the upper tank temperature detected by the tank temperature sensor 34. The tank unit controller 16 may determine the temperature equal to the upper tank temperature, as the first reference temperature. Alternatively, the tank unit controller 16 may determine the temperature slightly higher than the upper tank temperature, as the first reference temperature. That is, the first reference temperature is a temperature equal to or higher than the upper tank temperature.

The second heat exchanger 12 can heat the water so that the tank inflow temperature is slightly lower than the heat pump outlet temperature. According to the present embodiment, since the water pump 14 is started after the heat pump outlet temperature reaches the first reference temperature equal to or higher than the upper tank temperature, the tank inflow temperature during the second starting operation becomes a temperature that is closer to the upper tank temperature. Therefore, the decrease in the upper tank temperature can be prevented reliably.

When the hot water is stored in the hot-water storage tank 11 for a long time, the heat of the hot water is dissipated, whereby the upper tank temperature may be likely to be lower than the hot-water supply set temperature. When the amount of the hot water in the hot-water storage tank 11 is very small, the upper tank temperature may be lower than the hot-water supply set temperature. The first reference temperature is determined in response to the upper tank temperature. Therefore, when the upper tank temperature is low, the first reference temperature is also low. Accordingly, when the upper tank temperature is low, since the first reference temperature is also low, the first starting operation is shifted to the second starting operation at an earlier timing than when the upper tank temperature is high. That is, when the upper tank temperature is low, the shift timing from the first starting operation to the second starting operation becomes earlier. This makes it to possible to start the heat accumulating operation at an earlier timing. As a result, according to the present embodiment, it is possible to reliably prevent the shift timing from the first starting operation to the second starting operation from being delayed more than necessary when the upper tank temperature is low.

According to the present embodiment, the following advantages are obtained. The hot-water inlet 18 and the tank temperature sensor 34 are located at positions lower than the uppermost portion 42. Therefore, the temperature detected by the tank temperature sensor 34 may be lower than the temperature of the hot water in the uppermost portion 42. The tank unit controller 16 determines the first reference temperature in response to the upper tank temperature detected by the tank temperature sensor 34. Therefore, even when the temperature detected by the tank temperature sensor 34 is lower than the temperature of the hot water in the uppermost portion 42, the first reference temperature is determined in response to the temperature detected by the tank temperature sensor 34. Accordingly, when the temperature detected by the tank temperature sensor 34 is lower than the temperature of the hot water in the uppermost portion 42, the tank inflow temperature during the second starting operation is lower than the temperature of the hot water in the uppermost portion 42. At this time, the hot water having flowed into the hot-water storage tank 11 is diffused from the hot-water inlet 18 in the horizontal direction or the downward direction due to a difference in specific gravity and is mixed with the hot water stored in the hot-water storage tank 11. Therefore, the hot water having flowed into the hot-water storage tank 11 is not likely to be mixed with the hot water in the uppermost portion 42. As a result, since it is possible to reliably prevent decrease in the temperature of the hot water in the uppermost portion 42, there is an advantage that it is possible to reliably prevent the decrease in temperature of the hot water supplied to the hot-water supply pipe 23. Additionally, there is an advantage that it is possible to reliably prevent the shift timing from the first starting operation to the second starting operation from being delayed more than necessary when the temperature detected by the tank temperature sensor 34 is lower than the temperature of the hot water in the uppermost portion 42.

The heat pump controller 9 and the tank unit controller 16 may perform a preliminary starting operation before the first starting operation. In the preliminary starting operation, the heat pump controller 9 and the tank unit controller 16 work the compressor 4 while the heat-medium pump 13 and the water pump 14 are stopped. The following effects are obtained when the preliminary starting operation is performed. Since the heat medium does not flow in the secondary flow path 5b, the heat of the refrigerant can be prevented from being captured by the heat medium in the first heat exchanger 5. Therefore, the pressure of the refrigerant flowing in the first heat exchanger 5 is increased more quickly. As a result, the temperatures of the compressor 4 and the first heat exchanger 5 can be increased more quickly. For example, the timing of shifting from the preliminary starting operation to the first starting operation may be as follows. When the duration of the preliminary starting operation reaches a predetermined time, the heat pump controller 9 and the tank unit controller 16 may start the heat-medium pump 13 and start the first starting operation.

It is believed that as the outdoor air temperature becomes lower, the compressor 4 and the first heat exchanger 5 are low in temperature before the compressor 4 is started. Therefore, when the outdoor air temperature is high, the time period required to increase the temperatures of the compressor 4 and the first heat exchanger 5 is relatively short. In contrast to this, when the outdoor air temperature is low, the time period required to increase the temperatures of the compressor 4 and the first heat exchanger 5 is relatively long. In view of foregoing, when the outdoor air temperature detected by the outdoor air temperature sensor 41 is lower than a threshold, the heat pump controller 9 and the tank unit controller 16 may set the duration of the preliminary starting operation to be longer than when the outdoor air temperature is higher than the threshold. This enables the duration of the preliminary starting operation to be set to an appropriate length in response to the outdoor air temperature.

In the present embodiment, the preliminary starting operation is not a necessary element. The heat pump controller 9 and the tank unit controller 16 may start the first starting operation without performing the preliminary starting operation. At this time, the heat pump controller 9 and the tank unit controller 16 may start the compressor 4 and the heat-medium pump 13 at the same time or may start the compressor 4 after starting the heat-medium pump 13.

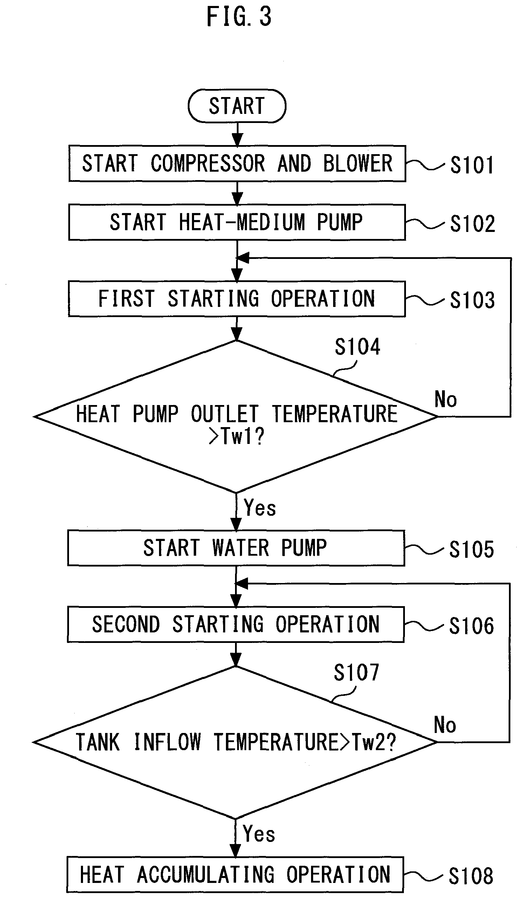

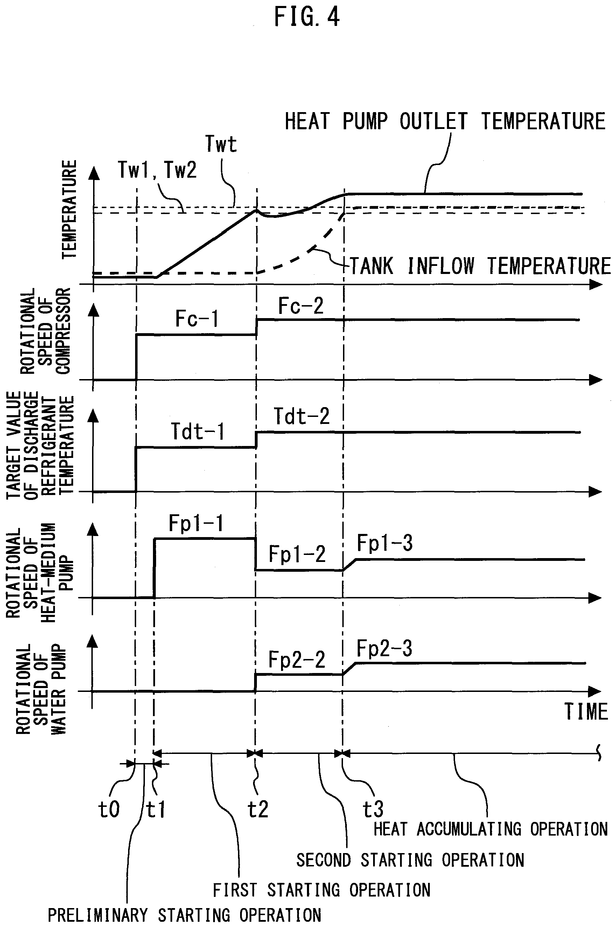

Fig. 3 is a flowchart illustrating an example of processes when the heat accumulating operation is started. Fig. 4 is a graph illustrating an example of a change over time in each of the temperature detected by the heat pump outlet temperature sensor 38, the temperature detected by the tank inflow temperature sensor 40, the rotational speed of the compressor 4, the target value of the discharge refrigerant temperature, the rotational speed of the heat-medium pump 13 and the rotational speed of the water pump 14, when the heat accumulating operation is started. Hereinafter, the present embodiment will be further described based on the example illustrated in Figs. 3 and 4.

In step S101 of Fig. 3, the heat pump controller 9 performs the preliminary starting operation by starting the compressor 4 and the blower 10. In Fig. 4, the preliminary starting operation is started at a time t0. When the preliminary starting operation is finished, the tank unit controller 16 starts the heat-medium pump 13 as a step S102. In this way, the preliminary starting operation is switched to the first starting operation of step S103. In Fig. 4, the first starting operation is started at a time t1.

The tank unit controller 16 determines a first reference temperature Tw1 in response to the upper tank temperature detected by the tank temperature sensor 34. During the first starting operation, as step S104, the tank unit controller 16 compares the heat pump outlet temperature detected by the heat pump outlet temperature sensor 38 with the first reference temperature Tw1. When the heat pump outlet temperature does not reach the first reference temperature Tw1, the first starting operation of step S103 is continued. When the heat pump outlet temperature reaches the first reference temperature Tw1, the tank unit controller 16 starts the water pump 14 as step S105. In this way, the first starting operation is switched to the second starting operation of step S106. In Fig. 4, the second starting operation is started at a time t2.

The tank unit controller 16 determines a second reference temperature Tw2. For example, the tank unit controller 16 may determine a temperature equal to the first reference temperature Tw1 as the second reference temperature Tw2 or a temperature higher than the first reference temperature Tw1 as the second reference temperature Tw2. The second reference temperature Tw2 may be also a temperature equal to a target hot-water storage temperature. During the second starting operation, as step S107, the tank unit controller 16 compares the tank inflow temperature detected by the tank inflow temperature sensor 40 with the second reference temperature Tw2. When the tank inflow temperature does not reach the second reference temperature Tw2, the second starting operation of step S106 is continued. When the tank inflow temperature reaches the second reference temperature Tw2, the tank unit controller 16 finishes the second starting operation and starts the heat accumulating operation as step S108. In Fig. 4, the heat accumulating operation is started at a time t3.

Hereinafter, description will be further made with reference to Fig. 4. During the preliminary starting operation and the first starting operation, the compressor 4 is driven at a rotational speed Fc-1. During the preliminary starting operation and the first starting operation, the heat pump controller 9 controls the opening degree of the expansion valve 6 so that the discharge refrigerant temperature detected by the refrigerant temperature sensor 32 is equal to a target value Tdt-1. During the first starting operation, the heat-medium pump 13 is driven at a rotational speed Fp1-1. The rotational speed Fp1-1 may be a speed equal to the maximum rotational speed of the heat-medium pump 13. That is, the tank unit controller 16 may work the heat-medium pump 13 at the maximum rotational speed during the first starting operation. In this way, during the first starting operation, the heat pump outlet temperature can be increased more quickly. In particular, even when the path 27 and the path 28 are long, the heat pump outlet temperature can be increased quickly.

During the second starting operation and the heat accumulating operation, the compressor 4 is driven at a rotational speed Fc-2. The heat pump controller 9 determines the rotational speed Fc-2 of the compressor 4 so that the heating power of the heat pump unit 2 during the heat accumulating operation satisfies target heating power. The rotational speed Fc-1 may be lower than the rotational speed Fc-2. That is, the heat pump controller 9 may work the compressor 4 so that the rotational speed Fc-1 of the compressor 4 during the first starting operation is lower than the rotational speed Fc-2 of the compressor 4 in the heat accumulating operation. This makes it possible to more reliably prevent the pressure of the refrigerant discharged from the compressor 4 from transiently becoming too high during the first starting operation.

During the second starting operation, the heat-medium pump 13 is driven at a rotational speed Fp1-2 lower than the rotational speed Fp1-1. This makes it possible to more reliably prevent the decrease in the heat pump outlet temperature, and further to more reliably prevent the decrease in the pressure of the refrigerant discharged from the compressor 4. The rotational speed Fp1-2 may be a speed equal to the minimum rotational speed of the heat-medium pump 13. In the illustrated example, the rotational speed of the heat-medium pump 13 is constant during the second starting operation, but the tank unit controller 16 may continuously or stepwise increase the rotational speed of the heat-medium pump 13 as the tank inflow temperature increases during the second starting operation.

During the second starting operation, the water pump 14 is driven at a rotational speed Fp2-2. The rotational speed Fp2-2 may be a speed equal to the minimum rotational speed of the water pump 14. In the illustrated example, the rotational speed of the water pump 14 is constant during the second starting operation, but the tank unit controller 16 may continuously or stepwise increase the rotational speed of the water pump 14 as the tank inflow temperature increases during the second starting operation. It is desirable that the tank unit controller 16 works the water pump 14 at the minimum rotational speed at least at early stage of the second starting operation. This makes it possible to increase the tank inflow temperature more quickly.

During the second starting operation and the heat accumulating operation, the opening degree of the expansion valve 6 is controlled so that the discharge refrigerant temperature is equal to a target value Tdt-2. As in the illustrated example, the target value Tdt-1 of the discharge refrigerant temperature during the first starting operation may be lower than the target value Tdt-2 of the discharge refrigerant temperature during the heat accumulating operation. This makes it possible to more reliably prevent the pressure of the refrigerant discharged from the compressor 4 from transiently becoming too high during the first starting operation.

During the heat accumulating operation in the steady state, the tank unit controller 16 preferably controls a rotational speed Fp1-3 of the heat-medium pump 13 so that a difference between the heat pump outlet temperature and the heat pump inlet temperature is equal to a constant target value. In this way, the flow rate of the heat medium becomes proper more reliably, which enabling higher efficient operation. In the illustrated example, the tank unit controller 16 controls the heat-medium pump 13 so that the rotational speed Fp1-3 during the heat accumulating operation in the steady state is higher than the rotational speed Fp1-2 during the second starting operation and lower than the rotational speed Fp1-1 during the first starting operation.

During the heat accumulating operation in the steady state, the tank unit controller 16 controls the rotational speed Fp2-3 of the water pump 14 so that the tank inflow temperature is equal to the target hot-water storage temperature Twt. In the illustrated example, the tank unit controller 16 controls the water pump 14 so that the rotational speed Fp2-3 during the heat accumulating operation in the steady state is higher than the rotational speed Fp2-2 during the second starting operation.

In the example illustrated in Figs. 3 and 4, the hot-water supply system 1 shifts from the second starting operation to the heat accumulating operation in response to a result of the tank unit controller 16 comparing the tank inflow temperature to the second reference temperature Tw2. Without being limited to this example, the hot-water supply system 1 may shift from the second starting operation to the heat accumulating operation when the duration of the second starting operation reaches a predetermined time, for example.

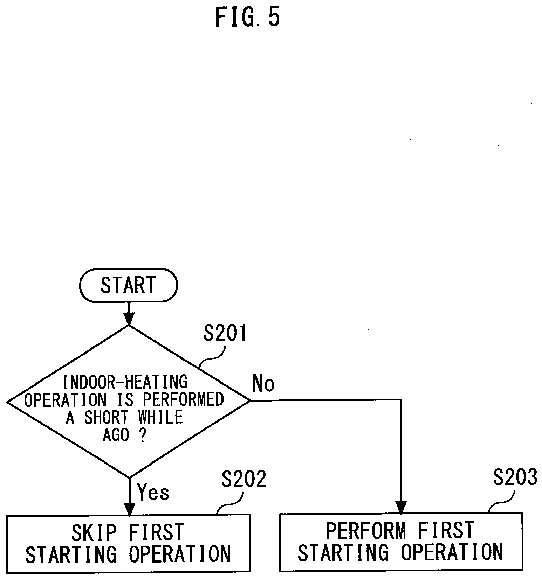

When performing the indoor-heating operation before starting the heat accumulating operation, the heat pump controller 9 and the tank unit controller 16 may start the heat accumulating operation without performing the first starting operation. For example, when shifting from the indoor-heating operation to the heat accumulating operation during the indoor-heating operation, or when starting the heat accumulating operation within a predetermined period of time after the indoor-heating operation is finished, the heat pump controller 9 and the tank unit controller 16 may skip the first starting operation and start the heat accumulating operation. In these cases, since the first heat exchanger 5 and the heat medium become high in temperature by the indoor-heating operation, the water which is not sufficiently heated is not likely to flow into the upper portion of the hot-water storage tank 11 even when the first starting operation is skipped. With respect to the foregoing, the description will be further made with reference to Fig. 5.

Fig. 5 is a flowchart illustrating an example of processes of determining whether to skip the first starting operation. When the heat accumulating operation need to be started, the tank unit controller 16 executes the processes in the flowchart in Fig. 5. As step S201, the heat pump controller 9 or the tank unit controller 16 determines whether the indoor-heating operation is performed a short while ago. For example, the heat pump controller 9 or the tank unit controller 16 determines that the indoor-heating operation is performed a short while ago, when the indoor-heating operation is currently being performed or when the indoor-heating operation is performed until a predetermined time period ago, and otherwise, the heat pump controller 9 or the tank unit controller 16 determines that the indoor-heating operation is not performed a short while ago. The above-described predetermined time period may be, for example, about 30 minutes. When the indoor-heating operation is performed a short while ago, the heat pump controller 9 and the tank unit controller 16 skip the first starting operation and start the second starting operation, as step S202. This makes it to possible to start the heat accumulating operation at an earlier timing. In contrast to this, when the indoor-heating operation is not performed a short while ago, the heat pump controller 9 and the tank unit controller 16 perform the first starting operation as step S203.

When the hot-water supply system 1 has a function of performing the preliminary starting operation, the heat pump controller 9 and the tank unit controller 16 skip the preliminary starting operation and the first starting operation, and start the second starting operation, as step S202. Additionally, as step S203, the heat pump controller 9 and the tank unit controller 16 perform the preliminary starting operation and the first starting operation.

### Reference Signs List

- 1: hot-water supply system
- 2: heat pump unit
- 3: tank unit
- 4: compressor
- 5: first heat exchanger
- 6: expansion valve
- 7: air heat exchanger
- 9: heat pump controller
- 10: blower
- 11: hot-water storage tank
- 12: second heat exchanger
- 13: heat-medium pump
- 14: water pump
- 15: flow-path switching valve
- 16: tank unit controller
- 17: water outlet
- 18: hot-water inlet
- 21: water circuit
- 22: water supply pipe
- 23: hot-water supply pipe
- 24: indoor-heating device
- 32: refrigerant temperature sensor
- 33: refrigerant temperature sensor
- 34, 35, 36: tank temperature sensor
- 37: heat pump inlet temperature sensor
- 38: heat pump outlet temperature sensor
- 39: inflow water temperature sensor
- 40: tank inflow temperature sensor
- 41: outdoor air temperature sensor
- 42: uppermost portion
- 50: remote controller

## Claims

1. A hot-water supply system (1) comprising:
a compressor (4) for compressing a refrigerant;
a first heat exchanger (5) for exchanging heat between the refrigerant compressed by the compressor (4) and a heat medium;
a second heat exchanger (12) for exchanging heat between the heat medium flowing out of the first heat exchanger (5) and water;
a heat-medium circuit (15, 25, 26, 27, 28, 29) connecting the first heat exchanger (5) to the second heat exchanger (12);
a heat-medium pump (13) for circulating the heat medium in the heat-medium circuit (15, 25, 26, 27, 28, 29);
a hot-water storage tank (11) including a lower portion provided with a water outlet (17), and an upper portion provided with a hot-water inlet (18) at a level higher than a level of the water outlet (17);
a water-feed path (19) connecting the water outlet (17) to the second heat exchanger (12);
a water-return path (20) connecting the second heat exchanger (12) to the hot-water inlet (18);
a water pump (14) for circulating the water in a water circuit formed by the water-feed path (19), the second heat exchanger (12), and the water-return path (20);
a heat pump outlet temperature sensor (38) for detecting a heat pump outlet temperature that is a temperature of the heat medium flowing out of the first heat exchanger (5);
an upper tank temperature sensor (34) for detecting an upper tank temperature that is a temperature of water in the upper portion of the hot-water storage tank (11); and
control circuitry (9, 16) configured to control a heat accumulating operation for causing hot water flowing out of the second heat exchanger (12) to flow into the hot-water storage tank (11), wherein the control circuitry (9, 16) is configured to:
in starting the heat accumulating operation, perform a first starting operation and a second starting operation after the first starting operation;
in the first starting operation, work the compressor (4) and the heat-medium pump (13) while the water pump (14) is stopped;
in the second starting operation, work the compressor (4), the heat-medium pump (13), and the water pump (14);
determine a first reference temperature in response to the upper tank temperature detected by the upper tank temperature sensor (34), the first reference temperature being equal to or higher than the upper tank temperature; and
finish the first starting operation and start the second starting operation, when the heat pump outlet temperature reaches the first reference temperature during the first starting operation.

2. The hot-water supply system (1) according to claim 1, wherein the control circuitry (9, 16) is configured to:
perform a preliminary starting operation before the first starting operation, and
in the preliminary starting operation, work the compressor (4) while the heat-medium pump (13) is stopped.

3. The hot-water supply system (1) according to claim 2, further comprising an outdoor air temperature sensor (41) for detecting an outdoor air temperature,
wherein the control circuitry (9, 16) is configured to set, when the outdoor air temperature is lower than a threshold, duration of the preliminary starting operation to be longer than when the outdoor air temperature is higher than the threshold.

4. The hot-water supply system (1) according to any one of claims 1 to 3, wherein the hot-water storage tank (11) has an uppermost portion (42) for storing hot water at a position higher than the hot-water inlet (18).

5. The hot-water supply system (1) according to claim 4, wherein a hot-water supply pipe (23) for taking out the hot water in the uppermost portion (42) is connected to the hot-water storage tank (11).

6. The hot-water supply system (1) according to any one of claims 1 to 5, wherein the upper tank temperature sensor (34) is disposed at the same height position as the hot-water inlet (18).

7. The hot-water supply system (1) according to any one of claims 1 to 6, wherein the control circuitry (9, 16) is configured to work the heat-medium pump (13) at a maximum rotational speed during the first starting operation.

8. The hot-water supply system (1) according to any one of claims 1 to 7, wherein the control circuitry (9, 16) is configured to work the compressor (4) so that a rotational speed of the compressor (4) during the first starting operation is lower than a rotational speed of the compressor (4) during the heat accumulating operation.

9. The hot-water supply system (1) according to any one of claims 1 to 8, wherein the control circuitry (9, 16) is configured to work the water pump (14) at a minimum rotational speed at least at early stage of the second starting operation.

10. The hot-water supply system (1) according to any one of claims 1 to 9, further comprising:
an indoor-heating device (24);
an indoor-heating circuit (27, 28, 30, 31) which is a circuit in which the heat medium is circulated through the first heat exchanger (5) and the indoor-heating device (24); and
a switching valve (15) for switching between an indoor-heating operation for causing the heat medium to be circulated in the indoor-heating circuit (27, 28, 30, 31) and the heat accumulating operation,
wherein the control circuitry (9, 16) is configured to start the heat accumulating operation without performing the first starting operation when the indoor-heating operation is performed before starting the heat accumulating operation.

## Patentansprüche

1. Warmwasserversorgungssystem (1), umfassend:
einen Verdichter (4) zum Verdichten eines Kältemittels;
einen ersten Wärmetauscher (5) zum Austauschen von Wärme zwischen dem durch den Verdichter (4) verdichteten Kältemittel und einem Wärmemedium;
einen zweiten Wärmetauscher (12) zum Austauschen von Wärme zwischen dem Wärmemedium, das aus dem ersten Wärmetauscher (5) ausströmt, und Wasser;
einen Wärmemediumkreislauf (15, 25, 26, 27, 28, 29), der den ersten Wärmetauscher (5) mit dem zweiten Wärmetauscher (12) verbindet;
eine Wärmemediumpumpe (13) zum Zirkulieren des Wärmemediums in dem Wärmemediumkreislauf (15, 25, 26, 27, 28, 29);
einen Warmwasserspeicherbehälter (11) mit einem unteren Abschnitt, der mit einem Wasserauslass (17) ausgestattet ist, und einem oberen Abschnitt, der mit einem Warmwassereinlass (18) ausgestattet ist, der auf einem höheren Niveau als das Niveau des Wasserauslasses (17) liegt;
einen Wasserzulaufpfad (19), der den Wasserauslass (17) mit dem zweiten Wärmetauscher (12) verbindet;
einen Wasserrücklaufpfad (20), der den zweiten Wärmetauscher (12) mit dem Warmwassereinlass (18) verbindet;
eine Wasserpumpe (14) zum Zirkulieren des Wassers in einem Wasserkreislauf, der durch den Wasserzulaufpfad (19), den zweiten Wärmetauscher (12) und den Wasserrücklaufpfad (20) gebildet ist;
einen Wärmepumpenauslasstemperatursensor (38) zum Erfassen einer Wärmepumpenauslasstemperatur, die eine Temperatur des aus dem ersten Wärmetauscher (5) strömenden Wärmemediums ist;
einen Oberer-Behälter-Temperatursensor (34) zum Erfassen einer Oberer-Behälter-Temperatur, die eine Temperatur von Wasser im oberen Abschnitt des Warmwasserspeicherbehälters (11) ist; und
einen Steuerschaltkreis (9, 16), der eingerichtet ist, einen Wärmeakkumulationsbetrieb, um zu bewirken, dass Warmwasser, das aus dem zweiten Wärmetauscher (12) strömt, in den Warmwasserspeicherbehälter (11) strömt, wobei der Steuerschaltkreis (9, 16) eingerichtet ist, um:
beim Starten des Wärmeakkumulationsbetriebs, einen ersten Startbetrieb und einen zweiten Startbetrieb nach dem ersten Startbetrieb durchzuführen;
beim ersten Startbetrieb den Verdichter (4) und die Wärmemediumpumpe (13) zu betätigen, während die Wasserpumpe (14) gestoppt ist;
beim zweiten Startbetrieb den Verdichter (4), die Wärmemediumpumpe (13) und die Wasserpumpe (14) zu betätigen;
eine erste Referenztemperatur als Antwort auf die Oberer-Behälter-Temperatur, die von dem Oberer-Behälter-Temperatursensor (34) erfasst wird, zu bestimmen, wobei die erste Referenztemperatur gleich oder höher als die Oberer-Behälter-Temperatur ist; und
den ersten Startbetrieb abzuschließen und den zweiten Startbetrieb zu starten, wenn die Wärmepumpenauslasstemperatur die erste Referenztemperatur während des ersten Startbetriebs erreicht.

2. Warmwasserversorgungssystem (1) nach Anspruch 1, wobei der Steuerschaltkreis (9, 16) eingerichtet ist, um:
einen vorläufigen Startbetrieb vor dem ersten Startbetrieb durchzuführen, und
beim vorläufigen Startbetrieb den Verdichter (4) zu betätigen, während die Wärmemediumpumpe (13) gestoppt ist.

3. Warmwasserversorgungssystem (1) nach Anspruch 2, ferner umfassend einen Außenlufttemperatursensor (41) zum Erfassen einer Au-βenlufttemperatur,
wobei der Steuerschaltkreis (9, 16) eingerichtet ist, um, wenn die Außenlufttemperatur unter einem Schwellenwert liegt, die Dauer des vorläufigen Startbetriebs einzustellen, länger zu sein als wenn die Außenlufttemperatur über dem Schwellenwert liegt.

4. Warmwasserversorgungssystem (1) nach einem der Ansprüche 1 bis 3, wobei der Warmwasserspeicherbehälter (11) einen obersten Abschnitt (42) zum Speichern von Warmwasser an einer Position aufweist, die höher als der Warmwassereinlass (18) liegt.

5. Warmwasserversorgungssystem (1) nach Anspruch 4, wobei eine Warmwasserversorgungsleitung (23) zur Entnahme des Warmwassers im obersten Abschnitt (42) mit dem Warmwasserspeicherbehälter (11) verbunden ist.

6. Warmwasserversorgungssystem (1) nach einem der Ansprüche 1 bis 5, wobei der Oberer-Behälter-Temperatursensor (34) auf der gleichen Höhenposition wie der Warmwassereinlass (18) angeordnet ist.

7. Warmwasserversorgungssystem (1) nach einem der Ansprüche 1 bis 6, wobei der Steuerschaltkreis (9, 16) eingerichtet ist, die Wärmemediumpumpe (13) während des ersten Startbetriebs mit einer maximalen Drehgeschwindigkeit zu betätigen.

8. Warmwasserversorgungssystem (1) nach einem der Ansprüche 1 bis 7, wobei der Steuerschaltkreis (9, 16) eingerichtet ist, den Verdichter (4) zu betätigen, so dass eine Drehgeschwindigkeit des Verdichters (4) während des ersten Startbetriebs niedriger ist als eine Drehgeschwindigkeit des Verdichters (4) während des Wärmeakkumulationsbetriebs.

9. Warmwasserversorgungssystem (1) nach einem der Ansprüche 1 bis 8, wobei der Steuerschaltkreis (9, 16) eingerichtet ist, die Wasserpumpe (14) zumindest in einer frühen Phase des zweiten Startbetriebs bei einer minimalen Drehgeschwindigkeit zu betätigen.

10. Warmwasserversorgungssystem (1) nach einem der Ansprüche 1 bis 9, weiter umfassend:
eine Innenerwärmungseinrichtung (24);
eine Innenerwärmungsschaltung (27, 28, 30, 31), welche eine Schaltung ist, in welcher das Wärmemedium durch den ersten Wärmetauscher (5) und die Innenerwärmungseinrichtung (24) zirkuliert; und
ein Umschaltventil (15) zum Umschalten zwischen einem Innenerwärmungsbetrieb, um zu bewirken, dass das Wärmemedium in der Innenerwärmungsschaltung (27, 28, 30, 31) zirkuliert, und dem Wärmeakkumulationsbetrieb,
wobei der Steuerschaltkreis (9, 16) eingerichtet ist, den Wärmeakkumulationsbetrieb zu starten, ohne den ersten Startbetrieb durchzuführen, wenn der Innenerwärmungsbetrieb vor dem Starten des Wärmeakkumulationsbetriebs durchgeführt wird.

## Revendications

1. Système d'alimentation en eau chaude (1) comprenant :
un compresseur (4) destiné à comprimer un réfrigérant ;
un premier échangeur thermique (5) destiné à échanger de la chaleur entre le réfrigérant comprimé par le compresseur (4) et un milieu caloporteur ;
un deuxième échange thermique (12) destiné à échanger de la chaleur entre le milieu caloporteur qui sort du premier échangeur thermique (5) et de l'eau ;
un circuit de milieu caloporteur (15, 25, 26, 27, 28, 29) qui relie le premier échangeur thermique (5) au deuxième échangeur thermique (12) ;
une pompe à milieu caloporteur (13) destinée à faire circuler le milieu caloporteur dans le circuit de milieu caloporteur (15, 25, 26, 27, 28, 29) ;
une cuve de stockage d'eau chaude (11) comprenant une partie inférieure équipée d'une évacuation d'eau (17), et une partie supérieure équipée d'une admission d'eau chaude (18) à un niveau supérieur à un niveau de l'évacuation d'eau (17) ;
un trajet d'alimentation en eau (19) qui relie l'évacuation d'eau (17) au deuxième échangeur thermique (12) ;
un trajet de retour d'eau (20) qui relie le deuxième échangeur thermique (12) à l'admission d'eau chaude (18) ;
une pompe à eau (14) destinée à faire circuler l'eau dans un circuit d'eau formé par le trajet d'alimentation en eau (19), le deuxième échangeur thermique (12) et le trajet de retour d'eau (20) ;
un capteur de température d'évacuation de pompe à chaleur (38) destiné à détecter une température d'évacuation de pompe à chaleur qui est une température du milieu caloporteur qui sort du premier échangeur thermique (5) ;
un capteur de température de cuve supérieure (34) destiné à détecter une température de cuve supérieure qui est une température de l'eau dans la partie supérieure de la cuve de stockage d'eau chaude (11) ; et
des circuits de commande (9, 16) configurés pour contrôler une opération d'accumulation de chaleur destinée à permettre à l'eau chaude qui sort du deuxième échangeur thermique (12) de s'écouler vers la cuve de stockage d'eau chaude (11), dans lequel les circuits de commande (9, 16) sont configurés pour :
lors du lancement de l'opération d'accumulation de chaleur, effectuer une première opération de démarrage et une deuxième opération de démarrage après la première opération de démarrage ;
lors de la première opération de démarrage, faire fonctionner le compresseur (4) et la pompe à milieu caloporteur (13) pendant que la pompe à eau (14) est arrêtée ;
lors de la deuxième opération de démarrage, faire fonctionner le compresseur (4), la pompe à milieu caloporteur (13) et la pompe à eau (14) ;
déterminer une première température de référence en réponse à la température de cuve supérieure détectée par le capteur de température de cuve supérieure (34), la première température de référence étant égale ou supérieure à la température de cuve supérieure ; et
mettre fin à la première opération de démarrage et lancer le deuxième opération de démarrage, lorsque la température d'évacuation de la pompe à chaleur atteint la première température de référence pendant la première opération de démarrage.

2. Système d'alimentation en eau chaude (1) selon la revendication 1, dans lequel les circuits de commande (9, 16) sont configurés pour :
effectuer une opération de démarrage préliminaire avant la première opération de démarrage, et
lors de l'opération de démarrage préliminaire, faire fonctionner le compresseur (4) pendant que la pompe à milieu caloporteur (13) est arrêtée.

3. Système d'alimentation en eau chaude (1) selon la revendication 2, comprenant en outre un capteur de température d'air extérieur (41) destiné à détecter une température d'air extérieur,
dans lequel les circuits de commande (9, 16) sont configurés pour définir, lorsque la température de l'air extérieur est inférieure à un seuil, une durée de l'opération de démarrage préliminaire comme étant plus longue que lorsque la température de l'air extérieur est supérieure au seuil.

4. Système d'alimentation en eau chaude (1) selon l'une quelconque des revendications 1 à 3, dans lequel la cuve de stockage d'eau chaude (11) possède une partie supérieure (42) destinée à stocker de l'eau chaude à un emplacement plus élevé que l'admission d'eau chaude (18).

5. Système d'alimentation en eau chaude (1) selon la revendication 4, dans lequel un tuyau d'alimentation en eau chaude (23) destiné à faire sortir l'eau chaude de la partie supérieure (42) est relié à la cuve de stockage d'eau chaude (11).

6. Système d'alimentation en eau chaude (1) selon l'une quelconque des revendications 1 à 5, dans lequel le capteur de température de cuve supérieure (34) est disposé à la même hauteur que l'admission d'eau chaude (18).

7. Système d'alimentation en eau chaude (1) selon l'une quelconque des revendications 1 à 6, dans lequel les circuits de commande (9, 16) sont configurés pour faire fonctionner la pompe à milieu caloporteur (13) à une vitesse de rotation maximale pendant la première opération de démarrage.

8. Système d'alimentation en eau chaude (1) selon l'une quelconque des revendications 1 à 7, dans lequel les circuits de commande (9, 16) sont configurés pour faire fonctionner le compresseur (4) de sorte qu'une vitesse de rotation du compresseur (4) pendant la première opération de démarrage soit inférieure à une vitesse de rotation du compresseur (4) pendant l'opération d'accumulation de chaleur.

9. Système d'alimentation en eau chaude (1) selon l'une quelconque des revendications 1 à 8, dans lequel les circuits de commande (9, 16) sont configurés pour faire fonctionner la pompe à eau (14) à une vitesse de rotation minimale au moins à une étape précoce de la deuxième opération de démarrage.

10. Système d'alimentation en eau chaude (1) selon l'une quelconque des revendications 1 à 9, comprenant en outre :
un dispositif de chauffage d'intérieur (24) ;
un circuit de chauffage d'intérieur (27, 28, 30, 31) qui est un circuit dans lequel le milieu caloporteur circule à travers le premier échangeur thermique (5) et le dispositif de chauffage d'intérieur (24) ; et
une soupape de commutation (15) destinée à basculer entre une opération de chauffage d'intérieur destinée à permettre au milieu caloporteur de circuler dans le circuit de chauffage d'intérieur (27, 28, 30, 31) et l'opération d'accumulation de chaleur,
dans lequel les circuits de commande (9, 16) sont configurés pour lancer l'opération d'accumulation de chaleur sans effectuer la première opération de démarrage lorsque l'opération de chauffage d'intérieur est effectuée avant de lancer l'opération d'accumulation de chaleur.
